# EUROPEAN PATENT SPECIFICATION

(11) **EP 0 358 172 B1**
(45) Date of publication and mention of the grant of the patent: **08.06.1994**
(21) Application number: 89116396.6
(22) Date of filing: 05.09.1989
(51) Int. Cl.: H04N 5/225

(54) **Video system provided with camera and recorder**
Mit Kamera und Aufzeichnungssystem ausgestattetes Videosystem
Système vidéo muni d'une caméra et d'un dispositif d'enregistrement

(30) Priority: 08.09.1988 JP 118676/88 U; 30.11.1988 JP 157189/88 U
(43) Date of publication of application: 14.03.1990
(73) Proprietor: CANON KABUSHIKI KAISHA, Tokyo (JP)
(72) Inventor: Tanaka, Chifuyu, Setagaya-ku Tokyo (JP); Takahashi, Koji, Yokohama-shi Kanagawa-ken (JP)
(74) Representative: Pellmann, Hans-Bernd, Dipl.-Ing.

(56) References cited:
- PATENT ABSTRACTS OF JAPAN vol. 10, no. 352 (E-458)(2408) 27 November 1986,& JP-A-61 150474 (MATSUSHITA ELECTRIC IND CO LTD) 09 July 1986,
- PATENT ABSTRACTS OF JAPAN vol. 11, no. 312 (E-548)(2759) 12 October 1987,& JP-A-62 105580 (SONY CORP) 16 May 1987,
- PATENT ABSTRACTS OF JAPAN vol. 8, no. 250 (E-279)(1687) 16 November 1984, JP-A-59 127483 (MATSUSHITA DENKI SANGYO K.K.) 23 July 1984,
- PATENT ABSTRACTS OF JAPAN vol. 8, no. 200 (E-266)(1637) 13 September 1984,& JP-A-59 086970 (CANON K.K.) 19 May 1984,

## Description

The present invention relates to a video system, and particularly to a video system which enables integral handling of a camera for converting optical information into electrical signals and a recorder for recording the electrical signals on a recording medium.

In cameras using so-called silver-halide films as recording media, it is generally necessary that the optical axis of an imaging lens basically intersects at right angles the exposure plane of a film serving as a recording medium.

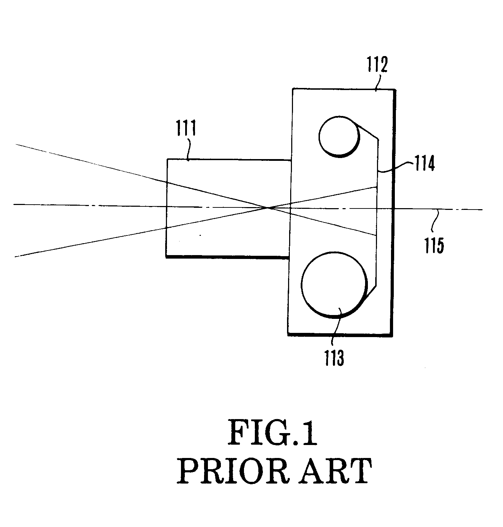

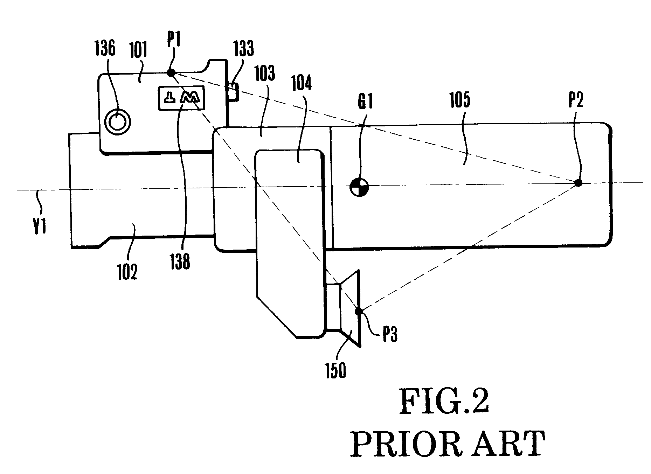

Fig. 1 shows the general structure of a camera using a silver-halide film as a recording medium. As shown in Fig. 1, the image of a subject projected from a camera lens 111 is recorded on the exposure plane of a film 114 which is disposed so as to intersect at right angles an optical axis 115. In such an arrangement in which the exposure plane of the film 114 is disposed so as to intersect at right angles the optical axis, a camera body 12 must be disposed as shown in Fig. 2 for the purpose of properly receiving a film cartridge 113 in the space. In other words, in the structure shown in Fig. 1, the widest end surface of the camera body 112 intersects the optical axis at right angles.

Although such cameras using silver-halide films as recording media have been recently manufactured as products in various structures, the structures are basically the same as the above-mentioned structure so long as the exposure plane of a film is caused to intersect the optical axis.

On the other hand, various types of recorders provided with cameras for converting optical information into electrical signals and recording the signals on the recording media have been recently developed. In particular, a so-called camera-integrated video tape recorder (referred to as an "integral VTR" hereinafter) using magnetic tapes as recording media are increasingly popular.

Fig. 2 shows the configuration of a so-called shoulder type of integral VTR. Such a VTR is described in Patent Abstracts of Japan Vol.8, no. 250 (E-279)(1687), 16. november 1984. In Fig. 2, reference numeral G1 denotes the center of gravity of the apparatus; reference numeral Y1, the optical axis; reference numeral 101, a grip; reference numeral 102, a lens unit; a reference numeral 103, a camera part; reference numeral 104, an electronic viewfinder (EVF) part; and reference numeral 105, a recorder part. The switches shown in Fig. 2 include a recording trigger switch 133, a recording trigger switch for low angles 136 and a zoom switch 138.

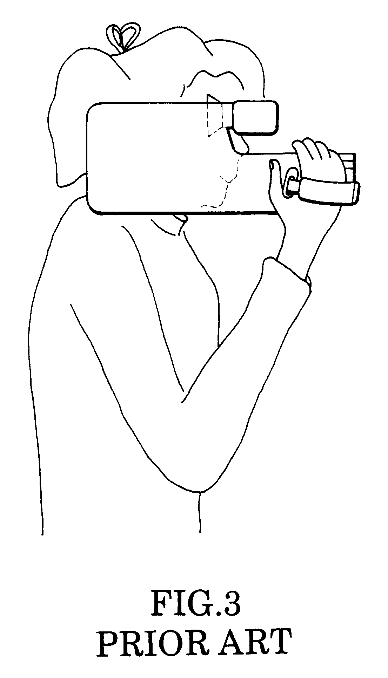

Fig. 3 shows an example in which the integral VTR shown in Fig. 2 is held during photography at a normal angle. As shown in Fig. 3, this sort of shoulder-type integral VTR is surely and stably held at three points, such as a right-hand support point p1 in the grip part 101, an ocular support point p3 in the ocular part of the EVF part 104 and a shoulder support point p2 in the recorder part 105.

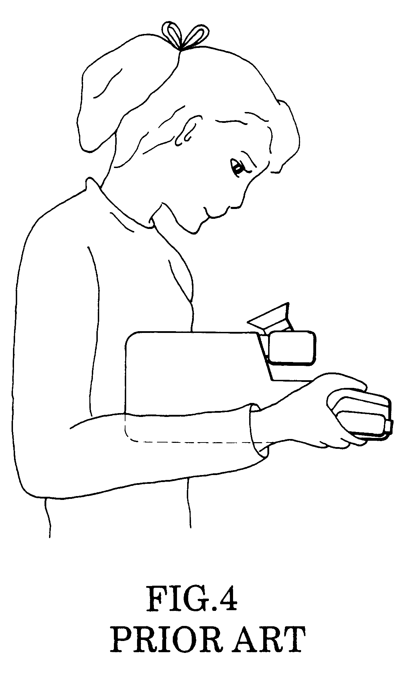

Fig. 4 shows an example in which the integral VTR shown in Fig. 2 is held during photography at a low angle. As shown in Fig. 4, during photography at a low angle, the apparatus is in a holding style in which the grip part 101 and the recorder part 105 are immobilized with both hands. In this case, since the recording trigger switch 133 cannot be easily operated, the low angle recording trigger switch 136 is operated.

Although the shoulder-type integral VTR shown in Fig. 2 can be surely and stably held, since the distance between the shoulder support point p2 and the ocular support point p3 is inevitably determined by the distance between the eyes and the shoulder of a human, no attempt can be made to reduce the overall size of the apparatus. In addition, during low-angle photography, it is necessary to hold the grip part 101 for normal (eye level) photography with the right hand on the upper side thereof, and to support the apparatus body with the left hand. A stable holding state thus cannot be expected in low-angle photography. Further, in this case, since the right hand by which the grip part 101 is held on the upper side thereof must be used for operating the low angle trigger switch 136, the holding becomes unstable each time the switch 136 is operated with the right hand. It is also difficult from the viewpoint of stable holding to operate the zoom switch 138 during such low angle photography. Furthermore, eye-level photography cannot be smoothly switched to low-angle photography because the right hand must be separated from the grip strap (not shown) of the grip part 101 and then placed on another portion thereof to hold it.

On the other hand, in recent years, one-hand types of integral VTR have been mainly popularized with a reduction in size of the integral VTR.

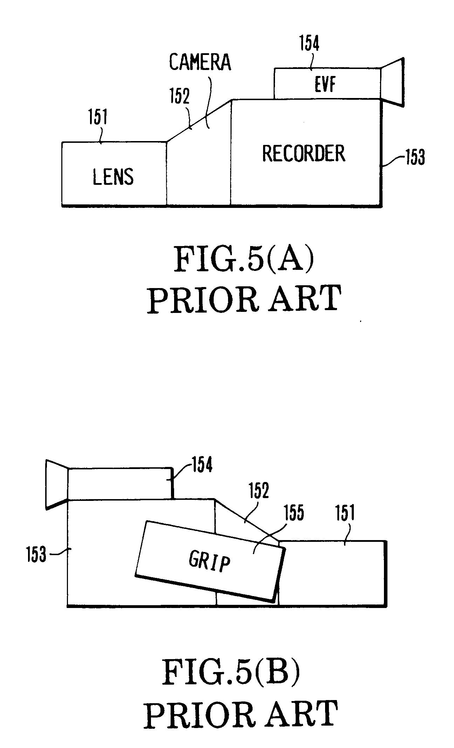

Figs. 5(A) and 5(B) show the most general structure of a one-hand type of integral VTR. Fig. 5(A) is a left-hand side view and Fig. 5(B) is a right-hand side view. In Figs. 5(A) and 5(B), reference numeral 151 denotes a lens unit for holding and driving a lens group serving as a photo-taking optical system; reference numeral 152, a camera part for converting optical information injected through the lens group in the lens unit 151 into electrical video signals; and reference numeral 153, a recorder part for recording the video signals from the camera part 152 on a magnetic tape. The lens unit 151, the camera part 152 and the recorder part 153 are generally disposed on a line. Reference numeral 154 denotes an electronic viewfinder (EVF) part for displaying the video signals recorded in the recorder part 153, and reference numeral 155 denotes a grip for allowing a photographer to hold the integral VTR.

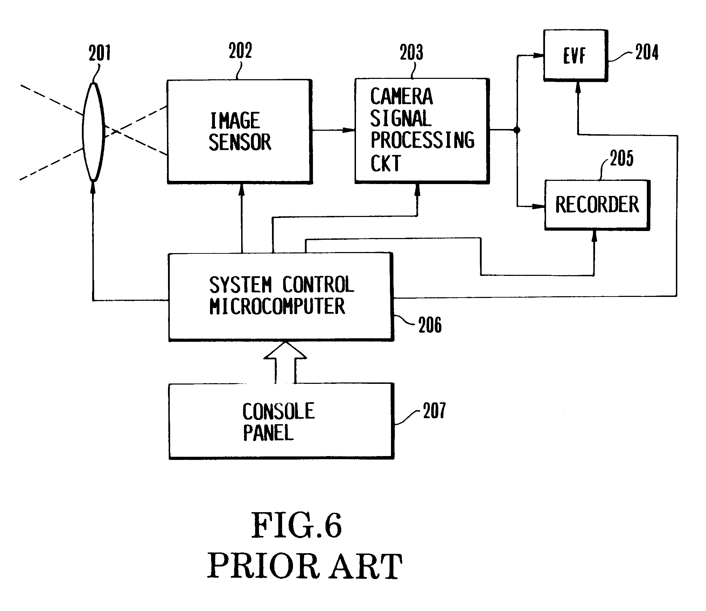

The configuration of the integral VTR is outlined below with reference to Fig. 6. The light-receiving face of an image sensor 202 in the camera part 152 should be caused to intersect the optical axis of the lens unit 151. The image of a subject is formed on the image sensor 202 through the lens group in the lens unit 151. The electrical signal corresponding to the image of the subject is output from the image sensor 202 and then supplied to a camera signal processing circuit 203. The circuit 203 converts the electrical signal into an image signal in a given form and then outputs it. The image signal output from the circuit 203 is electrically supplied to a recorder 205 and a EVF 204 and is recorded on the magnetic tape in the recorder 205 and displayed as a visible image on the display in the EVF 204.

The photographer operates a console panel 207 while confirming the image to be photographed by the EVF 204. The data indicating the contents of operation by the console panel 207 is broken down into commands indicating the contents of specific processing by a microcomputer 206 for system control and is then supplied to each of the parts. In particular, at least instructions to start recording and finish recording are given to the recorder 205 which thus serves to record the above-described image signal when receiving the instructions. It is a matter of course that the recorder 205 and the EVF 204 shown in Fig. 6 are contained in the recorder part 153 and the EVF part 154, respectively, as shown in Figs. 5(A) and 5(B).

As described above, the integral VTR enables the structure and arrangement of the respective parts to be freely determined except for the direction of the light-receiving face of the image sensor 202 and thus has a higher degree of structural freedom than cameras using silve-halide films. However, conventional integral VTRs do not make sufficient use of such a high degree of freedom and have anything but an optimum structure in the sense of human engineering. For example, the integral VTR shown in Figs. 5(A) and 5(B) involves the following disadvantages:

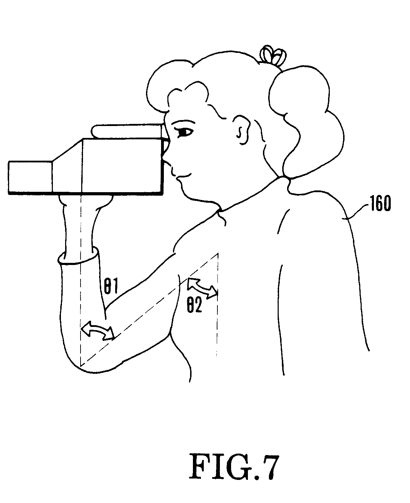

Fig. 7 is a diagram for explaining a first problem of the integral VTR shown in Figs. 5(A) and 5(B). The VTR can be stably held without movement of the hands during photography when the angle ϑ1 formed by the elbow joint of the photographer and the angle ϑ2 formed by the trunk and the upper arm thereof are smaller. Since the minimum value of the angle formed by the elbow joint is actually about 30°, it is preferable that ϑ1 = ϑ2 = 30°. In the integral VTR shown in Figs. 5(A) and 5(B), since the distance between the grip 155 and the ocular part of the EVF part 154 is large, the angles ϑ1 and ϑ2 are increased, as shown in Fig. 7. This makes stable holding impossible. In addition, in the structure shown in Figs. 5(A) and 5(B), the angles ϑ1 and ϑ2 are further increased owing to the necessity to increase the distance between the recorder 153 and the ocular part of the EVF part 154 in order to relieve the cramped feeling given to the photographer and because of contact of the recorder part 153 with the nose of the photographer, which are caused by the arrangement in which the recorder part 153 is disposed near the front of the photographer.

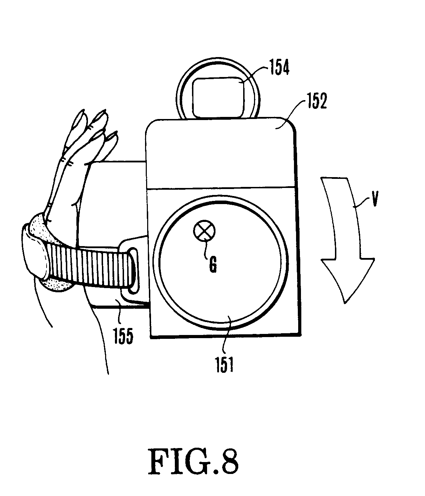

Fig. 8 is a diagram for explaining a second problem of the integral VTR shown in Figs. 5(A) and 5(B) in which the same reference numerals as those in Figs. 5(A) and 5(B) are used. Fig. 8 is a front view of the integral VTR shown in Figs. 5(A) and 5(B), the mark ⓧ in the figure representing the center of gravity of the integral VTR. On the other hand, since the photographer holds the integral VTR by the grip 155, a force is exerted on the wrist of the photographer in the direction shown by the arrow V. This force corresponds to a force to inwardly bend the wrist of the photographer and thus creates a great load on the photographer and inhibits stable holding.

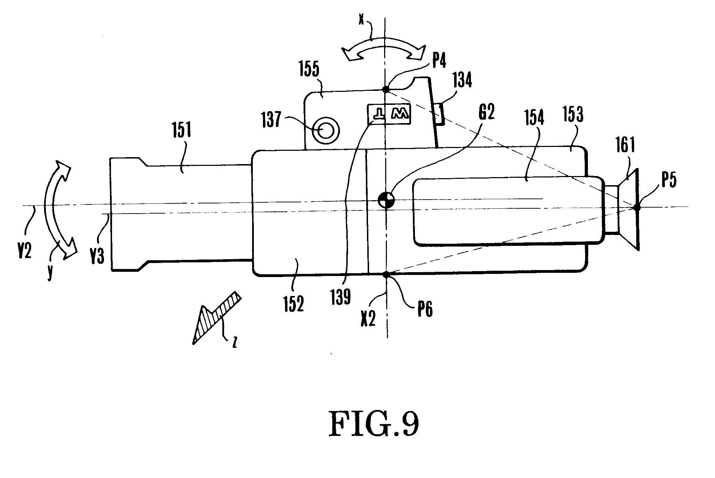

Fig. 9 shows the upper surface of a more specific example of the arrangement of the integral VTR shown in Figs. 5(A) and 5(B). In Fig. 9, reference numeral G2 denotes the center of gravity of the apparatus; reference numerals X2, Y2, axes which intersect each other at the center of gravity G2; reference numeral Y3, the optical axis; reference numeral 134, a recording trigger switch; reference numeral 137, a low-angle recording trigger switch; and reference numeral 139, a zoom trigger switch.

During the normal-angle photography shown in Fig. 7, as described above, a moment is produced in the direction shown by the arrow y or z, and the load exerted on the right hand is increased during photography for a long time or during telephotography.

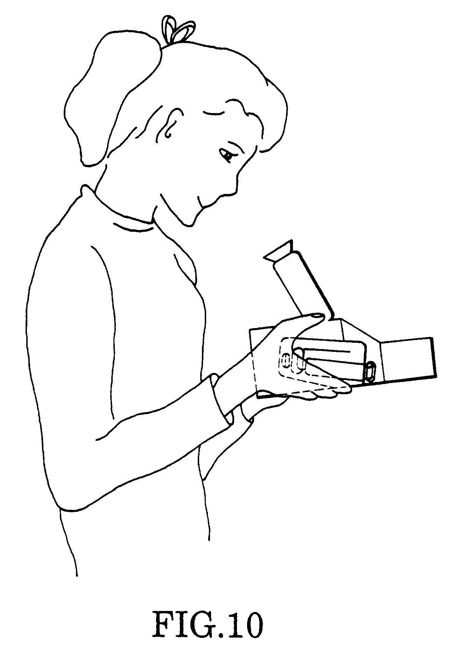

Fig. 10 shows an example in which the integral VTR shown in Fig. 9 is held during low-angle photography. As shown in Fig. 10, the apparatus is also in a holding style in which the grip part 155 and the recorder part 153 are immobilized with the both hands. In this case, since the normal recording trigger switch 134 cannot be easily operated, the low-angle recording trigger switch 137 is employed.

Although the left hand support point p6 is used during telephotography, the above-mentioned holding method which depends upon the point p6 is easily influenced by the movement of the hands caused by the moments which are produced in the directions shown by the arrow y and the arrow x. During low-angle photography, the integral VTR also involves problems with respect to unstable holding caused by the need to use the eye-level grip 155 and by the operation of the recording trigger switch 137 and the difficulty in operation of the zoom switch 139, these problems being the same as those of the above-mentioned shoulder-type integral VTR.

Furthermore, eye-level photography cannot be smoothly switched to low angle photography, and it is necessary to cause the right hand to enter the grip strap of the grip part 155 even in photography for a short time, which is annoying. It is therefore difficult to cope with a change of angles in accordance with a sudden chance to photograph or with the abrupt movement of a subject.

It is an object of the present invention to resolve the above-mentioned problems and provide a video system having a novel structure.

In is another object of the present invention to provide a video system which is excellent in the sense of human engineering and which particularly enables stable holding and is capable of photographing a good image without producing blurring and of keeping the fatigue of the photographer to a minimum.

These objects are achieved by the video system described in the claims.
Fig. 1 is a drawing of an example of the structure of a conventional camera using a silver-halide film;
Fig. 2 is a drawing of the structure of a conventional shoulder-type camera-integrated VTR;
Fig. 3 is a drawing of an example in which the camera-integrated VTR shown in Fig. 2 is held during eye-level photography;
Fig. 4 is a drawing of an example in which the camera-integrated VTR shown in Fig. 2 is held during low-angle photography;
Figs. 5(A) and 5(B) are drawings of a general structure of a conventional one-hand type of camera-integrated VTR;
Fig. 6 is a drawing of the arrangement of a general camera-integrated VTR;
Fig. 7 is a drawing of an example in which the camera-integrated VTR shown in Figs. 5(A) an 5(B) is held during eye-level photography;
Fig. 8 is a drawing for explaining the problems of the camera-integrated VTR shown in Figs. 5(A) and 5(B);
Fig. 9 is a top view of a typical example of the configuration of the one-hand type of camera-integrated VTR shown in Figs. 5(A) and 5(B);
Fig. 10 is a drawing of an example in which the camera-integrated VTR shown in Fig. 9 is held during low-angle photography;
Fig. 11 is a schematic drawing for explaining the structure a camera-integrated VTR in the preferred embodiment of the present invention;
Fig. 12 is a top view of a camera-integrated VTR in an embodiment of the present invention;
Fig. 13 is a side view of the same;
Fig. 14 is a rear view of the same;
Fig. 15 is a schematic top view of a camera-integrated VTR in another embodiment of the present invention;
Fig. 16 is a drawing of an example in which the camera-integrated VTR shown in Fig. 15 is held only by the right hand during eye-level photography;
Fig. 17 is a drawing of an example in which the camera-integrated VTR shown in Fig. 15 is held by using a second grip during eye-level photography;
Fig. 18 is a drawing of an example in which the camera-integrated VTR shown in Fig. 15 is held during low-angle photography;
Fig. 19 is a detailed top view of the camera-integrated VTR shown in Fig. 15;
Fig. 20 is a detailed rear view of the camera-integrated VTR shown in Fig. 15;
Fig. 21 is a detailed side view of the camera-integrated VTR shown in Fig. 15;
Fig. 22 is a schematic drawing of the configuration of the circuit of the camera-integrated VTR shown in Fig. 15; and
Fig. 23 is a timing chart which shows the operation timing in each of the parts shown in Fig. 22.

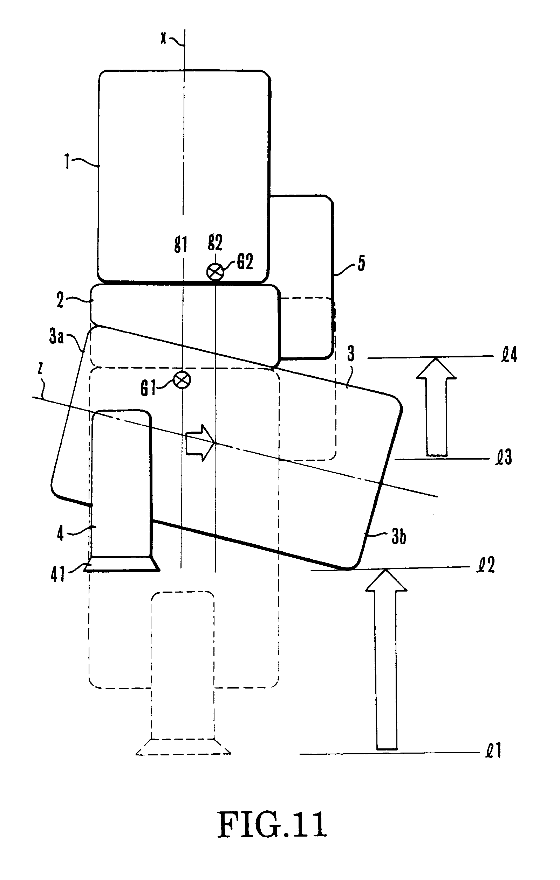

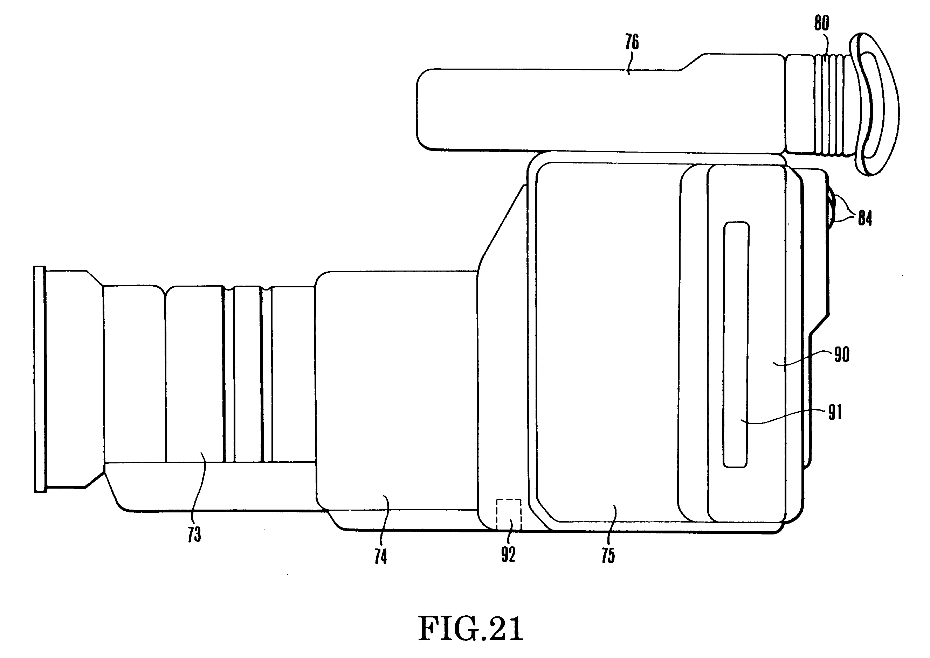

The structure of a camera integrated VTR in the preferred embodiment of the present invention is described below with reference to Figs. 11 to 23.

In Fig. 11, the external shape of a camera-integrated VTR in the preferred embodiment of the present invention is shown by the solid lines, and the external shape of a conventional camera-integrated VTR on the same physical scale as that of the embodiment is shown by the dotted lines. Fig. 11 is schematic top views of the camera-integrated VTRs in which reference numeral 1 denotes a lens unit; reference numeral 2, a camera casing; and reference numeral 3, a recorder casing. As shown in Fig. 11, the recorder casing 3 is disposed at an oblique angle in the lengthwise direction (shown by a one-dot chain line z in the figure) with respect to an optical axis (shown by a one-dot chain line x in the figure) of the lens unit 1 on a horizontal plane during photography. Since the image sensor in the camera casing 2 is so disposed as to intersect the optical axis x at right angles, the arrangement itself is the same as that of the conventional VTR shown in Fig. 6.

Such a disposal of the recorder casing 3 enables the resolution of the various problems of conventional VTRs. When an EVF part 4 is provided on the recorder casing 3, an ocular part 41 is placed near a grip 5. On the other hand, the center of gravity is moved from G1 to G2, and the grip 5 is also moved in response to the movement of the center of gravity. However, the ocular part 41 is moved from ℓ1 to ℓ2 while the grip 5 is moved from ℓ3 to ℓ4. Since the distance of movement of the ocular part 41 is smaller than that of the grip 5, the distance between the ocular part 41 and the grip 5 is consequently reduced.

In order to simply approach the ocular part 41 to the grip 5, an arrangement can be thought in which the recorder casing 3 intersects the optical axis x at right angles in the lengthwise direction z thereof. In this case, however, the EVF part 4 must be so disposed as to project from the recorder casing 3 toward the photographer. This arrangement gives a cramped feeling to the photographer and causes the nose to come into contact with the recorder casing 3. In addition, the position where the grip 5 is provided is inevitably close to the lens side so that the distance between the grip 5 and the ocular part 41 is not so reduced. Furthermore, since the grip 5 is provided near the lens unit 1, a force is exerted in the direction in which the recorder casing 3 is lowered because the direction of the optical axis x does not coincide with the center of gravity, resulting in the generation of a great load on the photographer.

In the preferred embodiment of the present invention shown in Fig. 11, in the state where the optical axis x is at an oblique angle with respect to the lengthwise direction z of the recorder casing 3, as described above, the EVF part 4 is provided in a portion between the optical axis x and the subject-side end 3a (the left side of the figure) of the recorder casing 3. Consequently, the ocular part 41 of the EVF part 4 is further approached to the grip 5 in the direction of the optical axis x. Further, in this case, since the center of gravity of the recorder casing 3 is positioned between the optical axis x and the photographer-side end 3b of the recorder casing 3, the center of gravity of the whole of the VTR approaches the photographer side, whereby the grip 5 can be further approached to the ocular part 41 in the direction of the optical axis x. Although the grip 5 is separated from the ocular part 41 in the direction intersecting the optical axis x at right angles, the distance between the grip 5 and the ocular part 41 in this direction is close to the distance between the positions of the eyes and the shoulder in the same direction and is thus rather preferable.

Furthermore, in the preferred embodiment of the present invention, in the state where the optical axis x is at an oblique angle with respect to the recorder casing 3 in the lengthwise direction z thereof, as described above, the center of gravity of the recorder casing 3 is positioned between the optical axis x and the photographer-side end 3b of the recorder casing 3 so that the center of gravity of the whole of the VTR approaches the side of the grip 5. It is therefore possible to reduce the force exerting in the direction shown by the arrow V in Fig. 8 and reduce the load on the photographer.

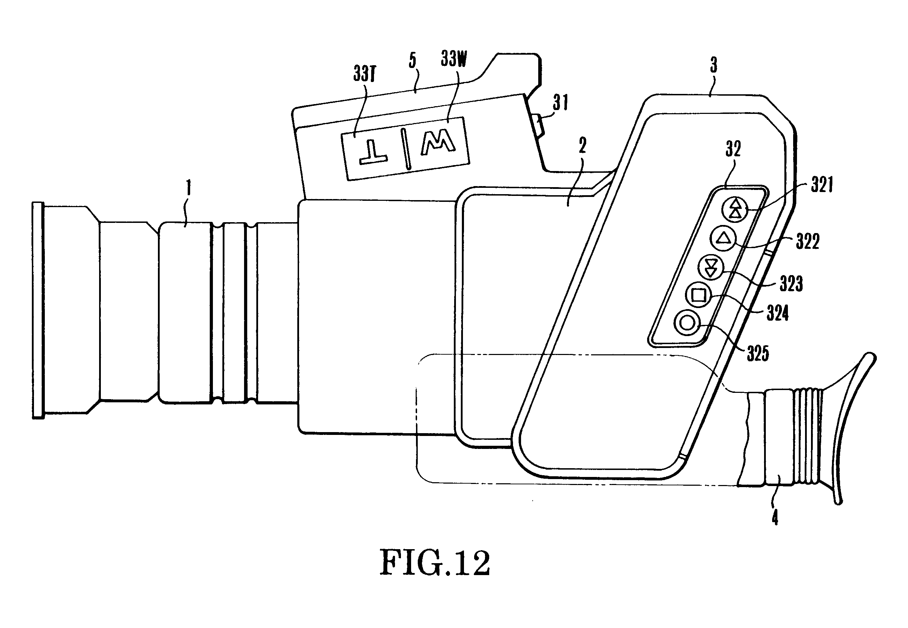

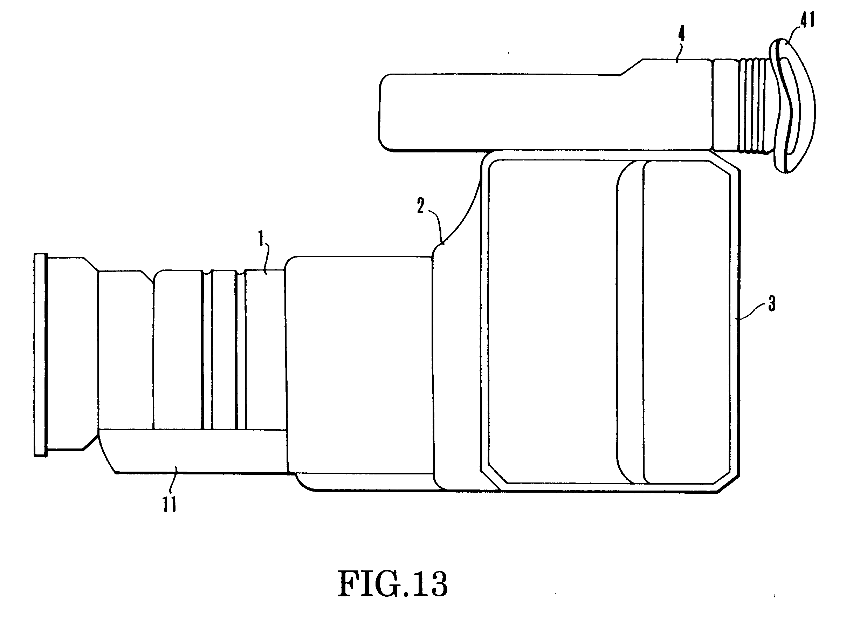

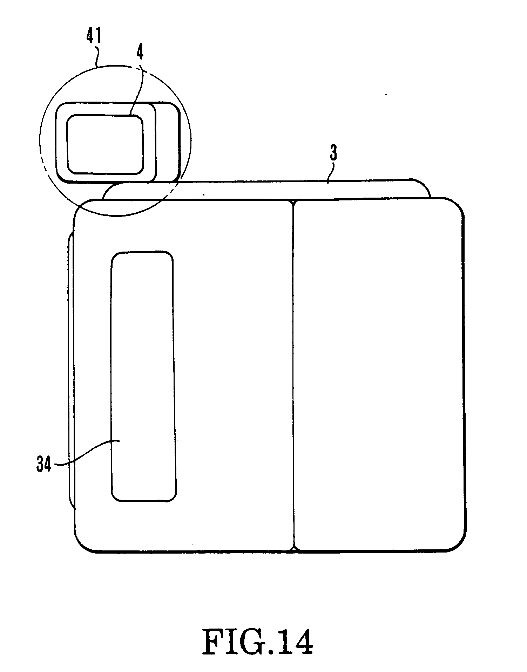

A description will now given of an example of the configuration of a camera-integrated VTR which is an embodiment of the above-described idea. Fig. 12 is a top view of a camera-integrated VTR in an embodiment of the present invention and Figs. 13 and 14 are a side view and a rear view, respectively, of the same.

In the grip part 5 shown in Fig. 12 are provided a trigger switch 31 for instructing to start and end photography, a telephoto indicating switch 33T for changing angles of view of the lens unit 1 and a wide-angle indicating switch 33W. The recorder casing 3 has a switch panel (console panel) 32 in which are provided a fast-forward button 321, a reproduction button 322, a rewind button 323, a stop button 324 and a picture recording button 325. The indications of these switches are transmitted to a control microcomputer through electrical processing which is the same as in conventional apparatuses so as to control the respective parts of the VTR.

In Fig. 13, in a lower cover 11 of the lens unit 1 are disposed lens driving actuators for adjusting the focus, the angle of view (focal length) and so on.

In Fig. 14, reference numeral 34 denotes a mounting part for a video tape cassette, the EVF part 4 and the eye-cup 41 serving as the ocular part of the EVF part 4 being positioned above this.

Although the above-mentioned embodiment concerns the camera-integrated VTR which is held by the right hand of the photographer who looks through the finder by the right eye, when the embodiment is applied to a camera-integrated VTR which is held by the left hand of the photographer who looks through the finder by the left eye, an arrangement which is symmetrical with respect to the optical axis enables the same effect as that described above to be expected.

An arrangement in which an optical finder using EVF is used as a finder also enables the same effect to be expected. In the case of an optical finder, the finder is preferably disposed near the optical axis because the optical path cannot easily be set if the finder is so disposed as to significantly deviate from the optical axis.

In addition, although the above-mentioned embodiment has the configuration in which the camera casing and the recorder casing are separately provided, an apparatus having a camera casing and a recorder casing which are common with each other can also exhibit the same effect if the common casing is disposed at an oblique angle with the optical axis in the lengthwise direction on the horizontal plane.

Further, although the above description concerns the case in which the lens unit, the camera part and the recorder part are always combined, the application of the present invention to an apparatus in which the lens unit is detachable from the camera part or in which the camera part is detachable from the recorder part also exhibits the same effect. In other words, the present invention is effective for the application to an apparatus which is handled in a state where the recorder part is combined with the camera part containing the lens unit at least during photography.

In addition, although the above-mentioned embodiment concerns an the camera-integrated VTR as an example in which the magnetic tape is used as a recording medium, the application of the present invention to a so-called electronic still camera for recording still pictures using a magnetic floppy disk can also exhibit the same effect.

As described above, the camera-integrated VTR shown in Figs. 11 to 14 has a structure which is excellent in the sense of human engineering, and particularly enables stable holding and good photography without camera shake.

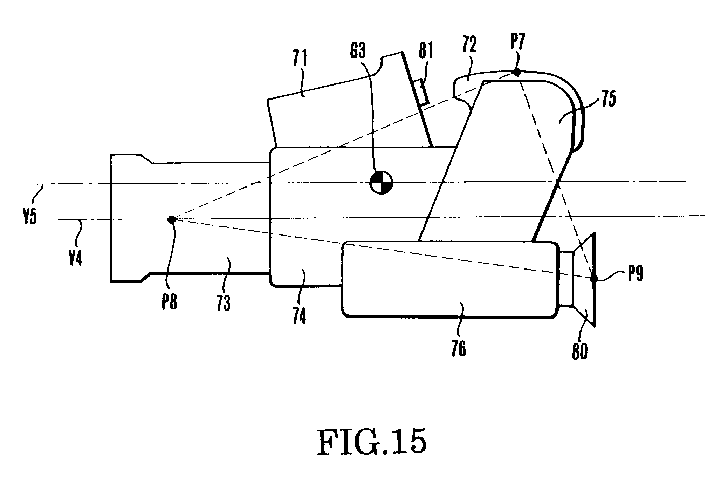

Fig. 15 is a schematic top view of an integral VTR in another embodiment of the present invention. In Fig. 15, reference numeral 71 denotes a first grip; reference numeral 72, a second drip; reference numeral 73, a lens unit; reference numeral 74, a camera casing; reference numeral 75, a recorder casing; reference numeral 76, an EVF part; reference numeral G3, the center of gravity; reference numeral Y4, the optical axis; and reference numeral Y5, a line passing through the center of gravity and parallel with the optical axis.

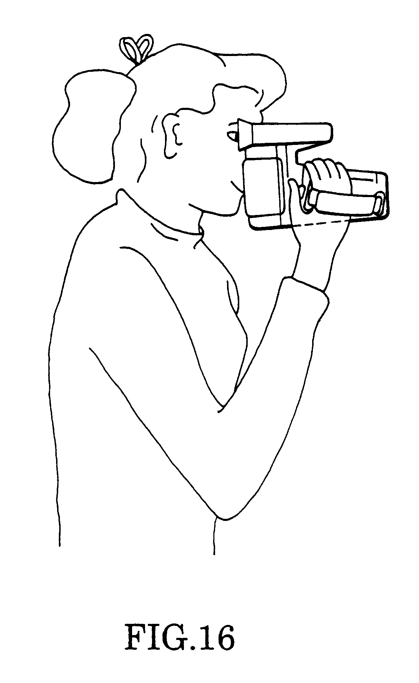

The integral VTR shown in Fig. 15 can be held only by the right hand with which the first grip is held in the same manner as in conventional one-hand types of integral VTR, as shown in Fig. 16. In particular, in the embodiment shown in Fig. 15, the recorder casing 75 is disposed along a plane intersecting the optical axis Y4 so that the entire length in the direction of the optical axis Y4 is reduced, whereby the distance in the direction of the optical axis between the grip 71 and the ocular part 80 of the EVF part 76 can be reduced, and thus the photographer can stably hold the VTR with closing the armpits. In addition, in the embodiment, since the recorder casing 75 is positioned near the first grip 71 with respect to the optical axis Y4, the center of gravity approaches the first grip 71. Since the recorder casing 75 is also disposed to be inclined so that the side of the recorder casing 75 near the first grip 71 is placed far from the subject, the degree of freedom of the position in which the first grip 71 is mounted is high so that the first grip 71 can be mounted near the center of gravity G3.

Fig. 16 shows an example in which the integral VTR shown in Fig. 15 is held only by the right hand, as shown in Fig. 16.

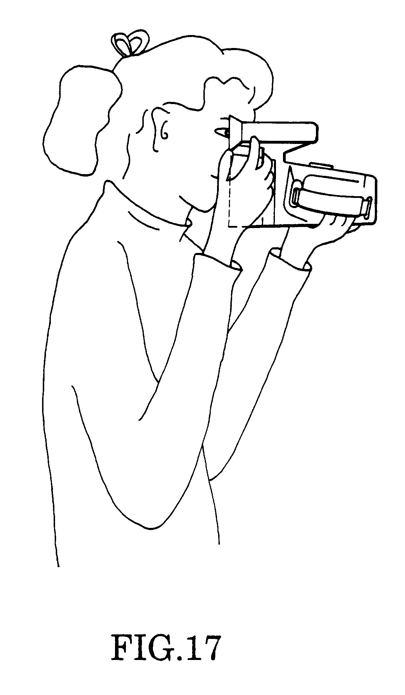

A description will now be given of holding using the second grip 72. Fig. 17 shows an example in which the integral VTR shown in Fig. 15 is held by using the second grip 72. As shown in the figure, the VTR can be extremely stably held by the right hand in the second grip 72, the left hand in a lower portion of the lens unit 73 and the ocular part 80, i.e., at the three points p7, p8, p9 shown in Fig. 15. In other words, the center of gravity G3 is close to the line segment connecting the supporting point p7 by the right hand and the supporting point p8 by the left hand, and a small shift produces such a moment that can be compensated for by the presence of the supporting point p9, resulting in extremely stable holding.

Such holding using the second grip 72 is particularly effective for, for example, telephotography in which the camera shake has a significant effect. in addition, only a short time is taken to switch the state where the integral VTR is released from the holding during non-photography to the holding state shown in Fig. 17, and there is no need to put the hand into the grip strap from the lower side of the apparatus, as conventional integral VTRs. The integral VTR is therefore excellent in its snapshooting properties and is particularly effective to the case of photography for several seconds.

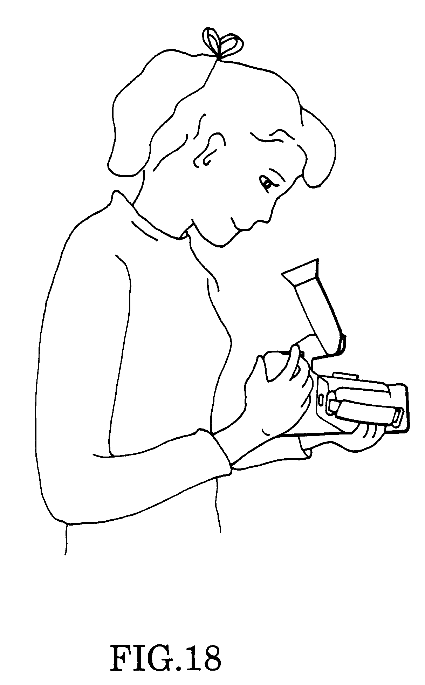

It is also possible to smoothly switch the state of eye-level photography using the second grip 72 (Fig. 17) to the state of low-angle photography (Fig. 18) without changing the state of the apparatus being held. In addition, since the second grip 72 is satisfactorily held in the state of low-angle photography, the apparatus can be stably held during low-angle photography.

The structure of the integral VTR shown in Fig. 15 is further described in detail below.

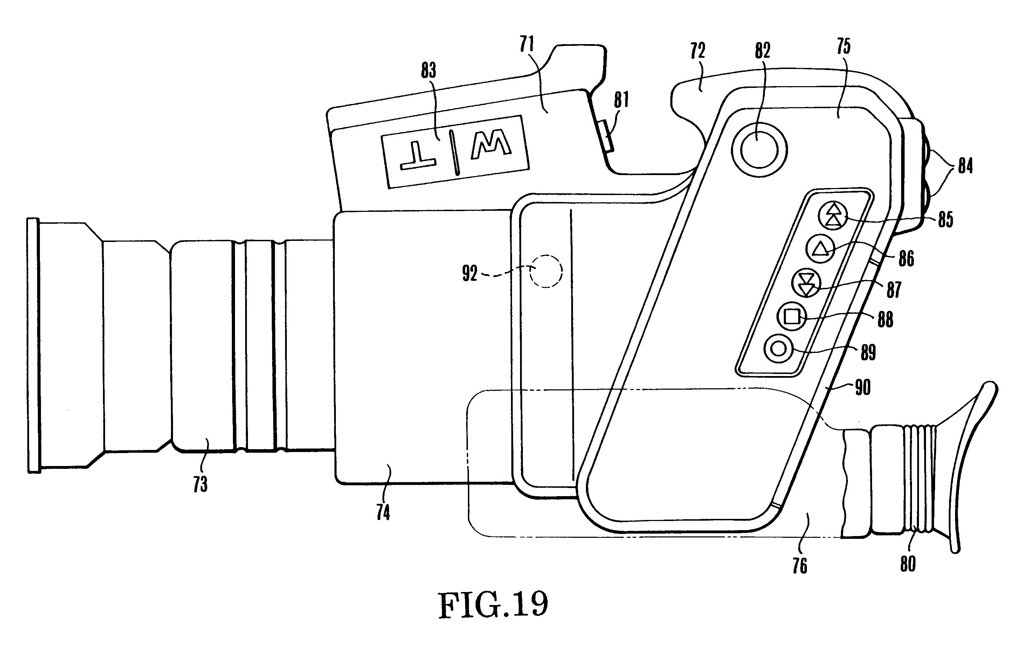

Fig. 19 is a detailed top view of the integral VTR shown in Fig. 15 and Figs. 20 and 21 are a rear view and a side view of the same. In the figures, the same parts as those in Fig. 15 are denoted by the same reverence numerals.

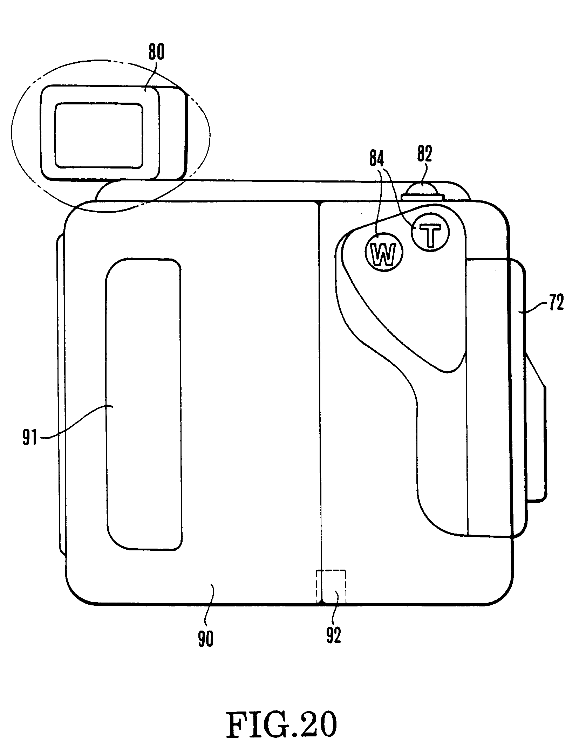

In Fig. 19, reference numeral 81 denotes a recording trigger switch of the first grip 71 and reference numeral 83 denotes a zoom ratio-changing switch of the first grip 71. In Figs. 19 and 20, reference numeral 82 denotes a recording trigger switch of the second grip 72 and reference numeral 84 denotes a zoom ratio-changing switch of the second grip 72.

In this way, the provision of the recording trigger switches and the zoom ratio-changing switches corresponding to the first grip 71 and the second grip 72 enables the start and stop of the recording and the changing-over of zoom ratios in either low-angle or eye-level photography, without the position of the right hand being changed, and this provision thus enables good photography.

In Fig. 19, reference numeral 85 denotes a fast-forward button; reference numeral 86, a reproduction button; reference numeral 87, a fast-rewind button; reference numeral 88, a stop button; and reference numeral 89, a picture recording button, which are all known in conventional VTRs. In Figs. 19 to 21, reference numeral 90 denotes a cassette cover which is closed and opened for the purpose of loading a tape cassette; reference numeral 91, a cassette window which is provided so that the cassette loaded can be seen from the outside; and reference numeral 92, a tripod socket.

The integral VTR of this embodiment enables framing by holding the second grip 72 with the right hand even in the case of photography by the VTR mounted on a tripod using the tripod socket 92, as well as enabling the operation of trigger switch 82 and the zoom ratio-changing switch 84 without the right hand being moved, resulting in an improvement in the operational properties in the use of a tripod.

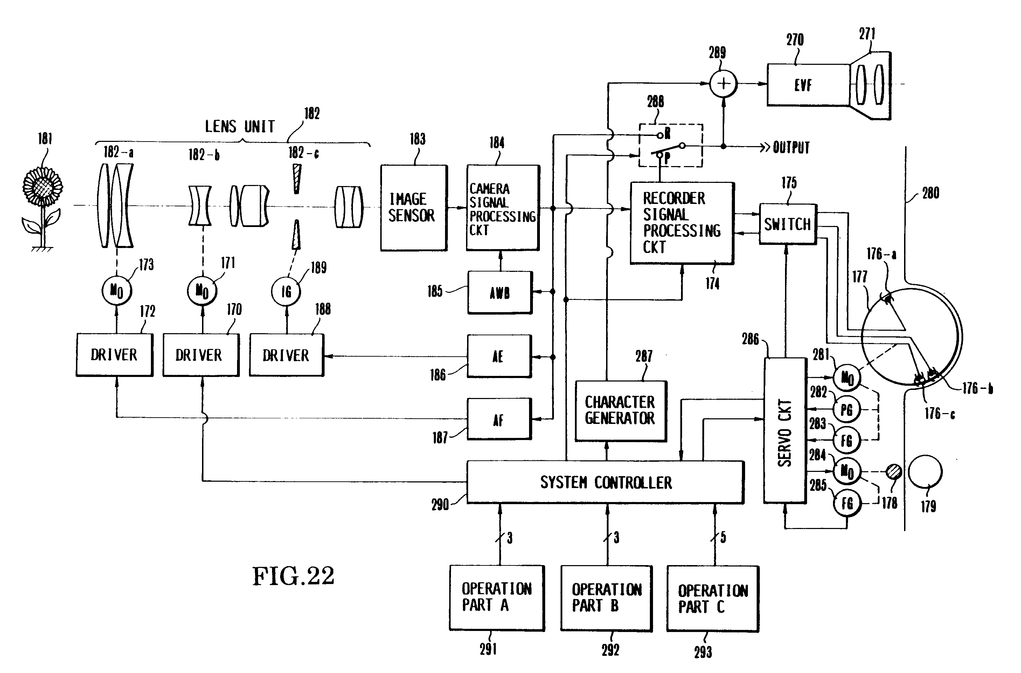

A description will now be made of the configuration of the circuit of the integral VTR of this embodiment and the operations of the group of the operational buttons thereof with reference to Fig. 22.

The light from a subject 181 passes through a lens unit 182 and forms an image on an image sensor 183. The electrical signals output from the image sensor 183 are converted into television signals by a camera signal processing circuit 184. Reference numeral 185 denotes an automatic white balance adjusting (AWB) circuit; reference numeral 186, an automatic exposure adjusting (AE) circuit; and reference numeral 187, an automatic focusing (AF) circuit. These circuits respectively output an AWB signal, an AE signal and an AF signal using the television signal output from the camera signal processing circuit 184.

The AWB signal is returned to the camera signal processing circuit 184 so as to control the balance of the gains of color signals. The AE signal is input to a driver 188 which drives an IG meter 189 so as to control a diaphragm adjusting mechanism 182-c of the lens unit 182 to appropriate exposure. The AF signal is input to a driver 172 which drives a focus motor 173 so as to control a focusing optical system 182-a of the lens unit 182 to a focused state.

The thus-controlled television signals output from the camera part are converted into recording signals by a recorder signal processing circuit 174 and then recorded in turn on a magnetic tape 280 by rotary heads 176-a, 176-b on a rotary cylinder 177 through a switch circuit 175.

The magnetic tape 280 is carried by a capstan 178 and a pinch roller 179. The capstan 178 is driven by a capstan motor 284, and the rotational speed thereof is detected by a capstan frequency detector (FG) 285 and controlled by a servo circuit 286. On the other hand, the rotary cylinder 177 on which the rotary heads 176-a, 176-b, 176-c are fixed is driven by a cylinder motor 281, and the rotational speed and the rotational phase thereof are detected by a cylinder frequency detector (FG) 283 and a cylinder phase detector (PG) 282, respectively, and are controlled by the servo circuit 286.

The servo circuit 286 supplies to the switch 175 a head switching signal synchronizing with the cylinder PG signal so that the switching of the switch 175 is controlled. The servo circuit 286 serves to control the motors 281 and 284 in accordance with the modes determined by the system controller 290. A character generator 287 supplies to an adder 289 a character signal indicating the mode which is determined by the system controller 290. A switch 288 is connected to the R side during recording and to the P side during reproduction so that the television signal from the camera signal processing circuit 184 and the reproduced television signal from the recorder signal processing circuit 174 are supplied to the adder 289 during recording and reproduction, respectively. The output from the adder 289 is supplied to an EVF 270 so that the image photographed or the image reproduced, on which the characters are superposed, is displayed through a magnifying optical system 271. The magnifying optical system 271 makes photographic framing visible without bringing the eyes into contact with the ocular part 80 particularly for the purpose of enabling low-angle photography by the apparatus which is held as shown in Fig. 18.

An operation part A 291 contains the recording trigger switch 81 and the zoom ratio-changing switch 83 shown in Figs. 19 to 21 and supplies to the system controller 290 a binary signal indicating whether or not the recording trigger switch 81 is turned on, a binary signal indicating whether or not the telephoto (T) side of the zoom ratio-changing switch 83 is turned on, and a binary signal indicating whether or not the wide-angle (W) side thereof is turned on. An operation part B 292 contains the recording trigger switch 82 and the zoom ratio-changing switch 84 and supplies the same three binary signals to the system controller 290. An operation part C 293 supplies to the system controller 290 five binary signals which respectively indicate whether or not the buttons 85 to 89 shown in Fig. 19 are turned on.

If the T side of the switch 83 or 84 is turned on, the system controller 290 drives the motor 171 by using the driver 170 so that a variable power optical system 182-b is moved to the telephoto side. If the W side of the switch 83 or 84 is turned on, the system controller 290 drives the motor 171 in the same manner as that described above so that the variable power optical system 182-b is moved to the wide-angle side. If the T side of one of the switches 83 and 84 is turned on and the W side of the other is turned on, the operation is performed in accordance with the operation of the switch 83 which is not easily brought into contact with the human bodies.

The system controller 290 is switched to the modes in accordance with the operations of the buttons 85 to 89 in the operation part C 293.

If the mode of picture recording is set by the operation of the button 89, the system controller 290 switches the switch 288 to the R side so as to cause the cylinder motor 281 and the capstan motor 284 to rotate by using the servo circuit 286 to bring about a recording stand-by state for standing by until the pinch roller 179 is attached to the capstan 178.

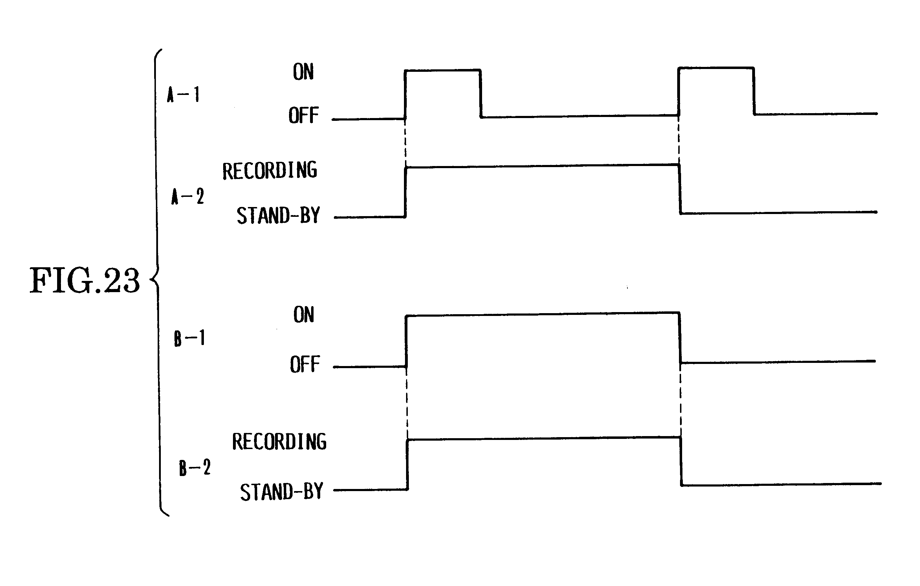

In this recording stand-by state, if the recording trigger switch on the side of the first grip 71 is turned on, the binary signal output from the operation part A 291 to the system controller 290 is at a high level indicating that the switch 28 is turned on, as shown by A-1 in Fig. 23 and, accordingly, the stem controller 290 causes the pinch roller 179 to attach to the capstan 178 to bring about a recording state. When the switch 81 is again turned on, the recording state returns to the recording stand-by sate.

While, if the recording trigger switch 82 on the side of the second grip 72 is turned on, the system controller 290 causes the pinch roller 179 to attach to the capstan 178 only during the time of the on-state to bring about a recording state, as shown by B-1 and B-2 in Fig. 23, and the recording sate returns to the recording stand-by state when the switch 82 is turned off.

This is because, since the second grip is used for photography for a short time or telephotography, as described above, the number of operations which cause the occurrence of blurring in the image during photography is reduced so that the operation of pushing the recording trigger switch 81 has one stroke for one shot, whereby the occurrence of blurring in the image can be suppressed during photography for a short time. In addition, the timing of the start and stop of recording can be determined without producing any delay.

When the reproduction mode is then set by the operation of the button 86, the system controller 290 switches the switch 288 to the P side and outputs the reproduced television signal, as well as displaying it in the EVF 270. The pinch roller 179 is then pressed to abut on the capstan 178 to create a reproduction state. In this state, if the recording trigger switch 82 on the side of the second grip 72 is turned on, the system controller 290 causes the capstan motor 284 to stop so as to bring the apparatus in a still picture reproduction state. When the recording trigger switch 82 is again turned on, the capstan motor 284 is driven to return this sate to the reproduction state. In this way, in the integral VTR of this embodiment, since the trigger switch 82 on the side of the second grip 72 is disposed on the same surface as the operational buttons 85 to 89, the number of the necessary buttons can be reduced by using the switch 82 also as a still picture reproduction button.

As described above, the camera-integrated VTR of the embodiment shown in Figs. 15 to 23 enables stable photography by using the grip 71 which is disposed near the center of gravity during one-hand photography and extremely stable holding by using the grip 72 during telephotography or photography for a short time. In addition, the use of the grip 72 enables stable low-angle photography and switching of angles.

Further, since the recording trigger switch and the zoom ratio-changing switch are provided for each of the grips, the operation can be easily performed in any photographic state.

As described above, the camera-integrated VTR shown in Figs. 15 to 23 enables stable holding in any desired photographic state and the reduction in the size of the apparatus itself.

## Claims

1. A video system comprising:
(a) a photographic optical system (1, 73);
(b) a camera for converting optical information obtained from said photographic optical system (1, 73) into an electrical signal;
(c) a recorder for recording said electrical signal on a recording medium; and
(d) a recorder casing (3, 75) for housing a part of said recorder;
(e) said recorder casing (3, 75) being arranged on an optical axis (x, Y4) of said photographic optical system (1, 73) during photography by said camera;
**characterized in that**
during photography by said camera the lengthwise direction (z) of said recorder casing (3, 75) is arranged to be oblique with respect to said optical axis (x, Y4) of said optical system (1, 73) when viewed from the top side of the system.

2. A system according to claim 1, wherein said system has a finder (4, 76) for displaying an image of a subject having passed through said optical system (1, 73), said finder (4, 76) being mounted at a portion of said recorder casing (3, 75) on the side of a subject-side end (3a) of said recorder casing (3, 75) relative to said optical axis (x, Y4).

3. A system according to claim 1 or 2, wherein said system has a grip (72) for holding said system, said grip (72) being disposed at a portion on the side of a photographer-side end of said recorder casing (75) relative to said optical axis (Y4).

4. A system according to claim 1, wherein the center of gravity of said recorder casing (75) is disposed at a portion on the side of a photographer-side end of said recorder casing (75) relative to said optical axis (Y4).

5. A system according to claim 1, wherein said system has a camera casing (2, 74) for housing a part of said camera, said camera casing (2, 74) being disposed along said optical axis (x, Y4) on a horizontal plane during photography by said camera.

6. A system according to claim 5, wherein said system has a grip (5, 71) for holding said system, said grip (5, 71) being mounted at a portion of said camera casing (2, 74) on the side of the center of gravity of said recorder casing (3, 75) relative to said optical axis (x, Y4).

7. A system according to claim 1, wherein a manual operating member (321 to 325, 85 to 90) for determining an operation mode of said recorder is disposed on an upper surface of said recorder casing (3, 75).

8. a video according to claim 1,
wherein said system has a first grip (71) for holding said system being mounted on said camera casing (74) and a second grip (72) for holding said system being mounted on said recorder casing (75).

9. A system according to claim 8, wherein said first and second grips (71, 72) are disposed on the same side relative to said optical axis (Y4) on a horizontal plane during photography by said camera.

10. A system according to claim 9, wherein said system has a finder for displaying an image of a subject having passed through said optical system, said finder being disposed on the same side as said first and second grips relative to said optical axis on a horizontal plane during photography by said camera.

11. A system according to claim 8, wherein said system has first and second trigger keys (81, 82) for commanding the start of recording by said recorder, said first trigger key (81) being provided at a position corresponding to said first grip (71) for said camera casing (74), said second trigger key (82) being provided at a position corresponding to said second grip (72) for said recorder casing (75).

12. A system according to claim 8 or 11, wherein said optical system (73) includes a zoom lens, and wherein said system has first and second zoom ratio-changing parts (83, 84) for changing a zoom ratio of said zoom lens, said first zoom ratio-changing part (83) being provided at a position corresponding to said first grip (71) for said camera casing (74), said second zoom ratio-changing part (84) being provided at a position corresponding to said second grip (72) for said recorder casing (75).

## Patentansprüche

1. Videosystem, das
(a) ein optisches Aufnahmesystem (1, 73),
(b) eine Kamera zum Umsetzen der aus dem optischen Aufnahmesystem (1, 73) erhaltenen optischen Information in ein elektrisches Signal,
(c) ein Aufzeichnungsgerät für das Aufzeichnen des elektrischen Signals auf einem Aufzeichnungsträger und
(d) ein Aufzeichnungsgerätgehäuse (3, 75) für das Unterbringen eines Teils des Aufzeichnungsgeräts aufweist,
(e) wobei das Aufzeichnungsgerätgehäuse (3, 75) während der Aufnahme mit der Kamera an einer optischen Achse (x, Y4) des optischen Aufnahmesystems (1, 73) angeordnet ist,
**dadurch gekennzeichnet**, daß
während der Aufnahme mit der Kamera die Längsrichtung (z) des Aufzeichnungsgerätgehäuses (3, 75) von der Oberseite des Systems her gesehen in bezug auf die optische Achse (x, Y4) des optischen Systems (1, 73) schräg gestellt ist.

2. System nach Anspruch 1, bei dem das System einen Sucher (4, 76) für das Darstellen eines durch das optische System (1, 73) hindurch tretenden Bildes eines Objektes hat, wobei der Sucher (4, 76) an einem Teil des Aufzeichnungsgerätgehäuses (3, 75) an der Seite eines in bezug auf die optische Achse (x, Y4) objektseitigen Endes (3a) des Aufzeichnungsgerätgehäuses (3, 75) angebracht ist.

3. System nach Anspruch 1 oder 2, bei dem das System einen Handgriff (72) zum Halten des Systems hat, wobei der Handgriff (72) an einem Teil an der Seite eines dem Fotografen zugewandten Endes des Aufzeichnungsgerätgehäuses (75) in bezug auf die optische Achse (Y4) angeordnet ist.

4. System nach Anspruch 1, bei dem der Schwerpunkt des Aufzeichnungsgerätgehäuses (75) an einem Teil an der Seite eines dem Fotografen zugewandten Endes des Aufzeichnungsgerätgehäuses (75) in bezug auf die optische Achse (Y4) angeordnet ist.

5. System nach Anspruch 1, bei dem das System ein Kameragehäuse (2, 74) für das Unterbringen eines Teils der Kamera hat, wobei das Kameragehäuse (2, 74) während des Aufnehmens mittels der Kamera entlang der optischen Achse (x, Y4) angeordnet ist.

6. System nach Anspruch 5, bei dem das System einen Handgriff (5, 71) zum Halten des Systems hat, wobei der Handgriff (5, 71) an einem Teil des Kameragehäuses (2, 74) seitlich des Schwerpunktes des Aufzeichnungsgerätgehäuses (3, 75) in bezug auf die optische Achse (x, Y4) angeordnet ist.

7. System nach Anspruch 1, bei dem ein Handbedienungselement (321 bis 325, 85 bis 90) für das Bestimmen einer Betriebsart des Aufzeichnungsgeräts an einer oberen Fläche des Aufzeichnungsgerätgehäuses (3, 75) angeordnet ist.

8. System nach Anspruch 1, bei dem das System einen ersten Handgriff (71) zum Halten des Systems, der an dem Kameragehäuse (74) angebracht ist, und einen zweiten Handgriff (72) für das Halten des Systems hat, der an dem Aufzeichnungsgerätgehäuse (75) angebracht ist.

9. System nach Anspruch 8, bei dem während des Aufnehmens mittels der Kamera der erste und der zweite Handgriff (71, 72) auf einer horizontalen Ebene auf der gleichen Seite in bezug auf die optische Achse (Y4) angeordnet sind.

10. System nach Anspruch 9, bei dem das System einen Sucher für die Darstellung eines durch das optische System hindurch tretenden Bildes eines Objektes hat, wobei der Sucher während des Aufnehmens mittels der Kamera auf der gleichen Seite wie der erste und der zweite Handgriff auf einer horizontalen Ebene in bezug auf die optische Achse angeordnet ist.

11. System nach Anspruch 8, bei dem das System eine erste und eine zweite Auslosetaste (81, 82) für das Befehlen des Beginnens der Aufzeichnung durch das Aufzeichnungsgerät hat, wobei die erste Auslösetaste (81) an einer Stelle angebracht ist, die dem ersten Handgriff (71) für das Kameragehäuse (74) entspricht, und die zweite Auslösetaste (82) an einer Stelle angebracht ist, die dem zweiten Handgriff (72) für das Aufzeichnungsgerätgehäuse (75) entspricht.

12. System nach Anspruch 8 oder 11, bei dem das optische System (73) eine Zoomlinse enthält und bei dem das System ein erstes und ein zweites Zoomverhältnisänderungsteil (83, 84) für das Ändern des Zoomverhältnisses der Zoomlinse hat, wobei das erste Zoomverhältnisänderungsteil (83) an einer Stelle angebracht ist, die dem ersten Handgriff (71) für das Kameragehäuse (74) entspricht, und das zweite Zoomverhältnisänderungsteil (84) an einer Stelle angebracht ist, die dem zweiten Handgriff (72) für das Aufzeichnungsgerätgehäuse (75) entspricht.

## Revendications

1. Système vidéo comprenant:
(a) un système optique photographique (1, 73) ;
(b) une caméra pour convertir des données optiques, obtenues du système optique photographique, en un signal électrique ;
(c) un dispositif d'enregistrement pour enregistrer ledit signal électrique sur un support d'enregistrement ; et
(d) un boîtier de dispositif d'enregistrement (3, 75) destiné à loger une partie dudit dispositif d'enregistrement ;
(e) ledit boîtier de dispositif d'enregistrement (3, 75) étant disposé sur un axe optique (x, Y4) du système optique photographique (1, 73) pendant la prise de vues par ladite caméra ;
caractérisé en ce que
pendant la prise de vues par ladite caméra, le sens longitudinal (z) du boîtier de dispositif d'enregistrement (3, 75) est disposée de façon à être oblique par rapport à l'axe optique (x, Y4) du système optique (1, 73), lorsque le système est vu de dessus.

2. Système selon la revendication 1, caractérisé en ce que le système dispose d'un viseur (4, 76) pour afficher une image d'un sujet ayant traversée ledit système optique (1, 73), le viseur (4, 76) étant monté sur une partie du boîtier de dispositif d'enregistrement (3, 75) située sur le côté d'une extrémité côté sujet (3a) dudit boîtier de dispositif d'enregistrement (3, 75) par rapport à l'axe optique (x, Y4).

3. Système selon la revendication 1 ou la revendication 3, caractérisé en ce que le système possède une poignée (72) pour tenir le système en main, la poignée (72) étant disposée sur une partie du côté d'une extrémité côté photographe dudit boîtier de dispositif d'enregistrement (75) par rapport à l'axe optique (Y4).

4. Système selon la revendication 1, caractérisé en ce que le centre de gravité du boîtier de dispositif d'enregistrement (75) est situé à un emplacement du côté d'une extrémité côté photographe dudit boîtier de dispositif d'enregistrement (75) par rapport à l'axe optique (Y4).

5. Système selon la revendication 1, caractérisé en ce que le système possède un boîtier de caméra (2, 74) destiné à loger une partie de ladite caméra, ledit boîtier de caméra (2, 74) étant disposé le long de l'axe optique (x, Y4), sur un plan horizontal, pendant la prise de vue par ladite caméra.

6. Système selon la revendication 5, caractérisé en ce que le système dispose d'une poignée (5, 71) pour tenir le système en main, la poignée (5, 71) étant montée à un emplacement du boîtier de caméra (2, 74) situé sur le côté du centre de gravité dudit boîtier de dispositif d'enregistrement (3, 75) par rapport à l'axe optique (x, Y4).

7. Système selon la revendication 1, caractérisé en ce qu'un organe de commande manuelle (321 à 325, 85 à 90) pour déterminer un mode de fonctionnement du dispositif d'enregistrement est situé sur une face supérieure dudit boîtier de dispositif d'enregistrement (3, 75).

8. Système vidéo selon la revendication 1, caractérisé en ce que le système dispose d'une première poignée (71), pour tenir le système en main, montée sur le boîtier de caméra (74), et d'une deuxième poignée (72), pour tenir le système en main, montée sur ledit boîtier de dispositif d'enregistrement (75).

9. Système selon la revendication 8, caractérisé en ce que les première et deuxième poignées (71, 72) sont disposées du même côté par rapport à l'axe optique (Y4), sur un plan horizontal, pendant la prise de vues par ladite caméra.

10. Système selon la revendication 9, caractérisé en ce que le système possède un viseur pour afficher une image d'un sujet ayant traversée ledit système optique, le viseur étant disposé du même côté que les première et deuxième poignées par rapport à l'axe optique, sur un plan horizontal, lors de la prise de vues par la caméra.

11. Système selon la revendication 8, caractérisé en ce que le système dispose de premier et deuxième boutons de déclenchement (81, 82) pour commander le début d'enregistrement par ledit dispositif d'enregistrement, le premier bouton de déclenchement (81) étant prévu à une position correspondant à la première poignée (71) pour le boîtier de caméra (74), et le deuxième bouton de déclenchement (82) étant prévu à une position correspondant à la deuxième poignée (72) pour le boîtier de dispositif d'enregistrement (75).

12. Système selon la revendication 8 ou la revendication 11, caractérisé en ce que le système optique (73) comporte une lentille à focale variable (zoom), et en ce que le système dispose de première et deuxième organes de modification des limites de réglage du zoom (83, 84) pour modifier les limites de réglage de ladite lentille à focale variable, le premier élément de modification des limites de réglage (83) étant situé à une position correspondant à la première poignée (71) pour le boîtier de caméra (74), et le deuxième élément de modification des limites de réglage (84) étant situé à une position correspondant à la deuxième poignée (72) destinée au boîtier du dispositif d'enregistrement (75).
